# EUROPÄISCHE PATENTSCHRIFT

(11) **EP 1 431 604 B1**
(45) Veröffentlichungstag und Bekanntmachung des Hinweises auf die Patenterteilung: **12.12.2007**
(21) Anmeldenummer: 03023304.3
(22) Anmeldetag: 15.10.2003
(51) Int. Cl.: F16D 3/41

(54) **Kreuzgelenk mit einem Sicherungselement**
Universal joint with retainer element.
Joint universel avec élément de retenue.

(30) Priorität: 20.12.2002 DE 10261114
(43) Veröffentlichungstag der Anmeldung: 23.06.2004
(73) Patentinhaber: Spicer Gelenkwellenbau GmbH, 45143 Essen (DE)
(72) Erfinder: Gille, Wilfried, 46286 Dorsten (DE); Wons, Andreas, 47445 Moers (DE)
(74) Vertreter: Harwardt, Günther

(56) Entgegenhaltungen:
- DE-A- 3 900 228
- DE-C- 3 446 456
- US-A- 2 512 690
- US-A- 2 773 368

## Beschreibung

Die Erfindung betrifft ein Kreuzgelenk mit einem Sicherungselement, das zur Sicherung einer Lagerbüchse, die ein Zapfenkreuz lagert und in einer Lagerbohrung eines Gabelarmes einer Gelenkgabel aufgenommen ist, dient, gemäß dem Oberbegriff des Anspruchs 1.

Ein solches Kreuzgelenk ist in der US 2 512 690 gezeigt.

In der DE 34 46 456 C1 ist eine Axialsicherung für eine Lagerbüchse in einem Gabelauge einer Gelenkgabel eines Kreuzgelenkes beschrieben. Angrenzend zur Lagerbohrung ist in einem Bereich derselben, der nach außen über den Boden der Lagerbüchse vorsteht, eine sich über den vollen Umfang erstreckende Ringnut vorgesehen. An zwei diametral gegenüberliegenden Stellen des Augenbereiches befindet sich jeweils eine Nut, in die ein im Querschnitt als Winkelring gestalteter Sicherungsring mit Vorsprüngen einführbar und dann zur Festlegung verdrehbar ist, so dass die Vorsprünge in die Nut eingreifen. Die Sicherung des Ringes gegen Verdrehen erfolgt dann durch eine Madenschraube. Es wird also für den Sicherungsring eine Art Bajonettverschlusssystem gewählt.

Beim Abwinkeln der Gelenkgabeln eines Kreuzgelenkes zueinander greifen wechselseitig die Gabelarme der einen Gelenkgabel in die Lücke zwischen den Gabelarmen der anderen Gelenkgabel ein. Die Gabelarme einer Gelenkgabel sind mit einem Verbindungsabschnitt verbunden. Sie stehen von diesem versetzt zur Längsachse vor. Insbesondere die freien Enden der Gabelarme tauchen jeweils in den Freiraum zwischen den Gabelarmen der anderen Gelenkgabel ein. Je größer der Abstand der Außenkontur der Gabelarme im Bereich ihrer dem Verbindungsabschnitt entfernten Enden vom Beugezentrum des Gelenkes ist, desto größer wird der Rotationskreis bei Abwinklung der beiden Gelenkgabeln zueinander. Grundsätzlich ist es insbesondere für Gelenkwellen, die für eine hohe Drehmomentkapazität ausgelegt sind, erforderlich, die einzelnen Gelenkgabeln eines Kreuzgelenkes so kompakt wie möglich auszulegen, d.h. den Rotationsdurchmesser möglichst gering zu halten.

Der Erfindung liegt daher die Aufgabe zugrunde, ein Kreuzgelenk zu schaffen, das unter Beibehalt der Abwinklungsfähigkeit der Gelenkgabeln des Kreuzgelenkes zueinander kompakter gestaltet ist, d.h. einen geringeren Rotationsdurchmesser aufweist, und ein einfach zu montierendes Sicherungselement umfasst.

Gelöst wird diese Aufgabe erfindungsgemäß durch ein Kreuzgelenk gemäß Anspruch 1.

Von Vorteil bei dieser Ausbildung ist, dass in dem Abschnitt des Augenbereichs der Gabelarme einer Gelenkgabel Material eingespart werden kann, in dem bei einer konventionellen Konstruktion ein Sicherungsring in einer Nut sitzt, d.h. den Rotationsdurchmesser bei Abwinklung der Gelenkgabeln zueinander bestimmt. Dadurch, dass die Sicherung einseitig dem freien Ende der Gabelarme entfernt angeordnet werden kann, ist es möglich, insgesamt eine kompaktere Bauweise zu erzielen, d.h. den Rotationsdurchmesser insbesondere unter Abwinklung zu verringern, so dass trotz verringertem Rotationsdurchmesser keine Verringerung der Drehmomentkapazität bei gleichbleibender Abwinklung erzielt wird. Dabei wird als Idealzustand angestrebt, dass die durch das vorgegebene Drehmoment konstruktiv bestimmte Zapfenkreuzlagerung über die Lagerbüchsen den Rotationsdurchmesser begrenzen, in dem die Gelenkgabeln an ihren freien Enden mit ihrer Außenkontur zur Längsachse zurückversetzt verlaufen. Auch die Breite der Wulst kann so ausgelegt werden, dass der Rotationsdurchmesser nicht negativ beeinflusst wird.

Durch die Ösen an den freien Enden der Halteabschnitte kann das Sicherungselement einfach mit einem Werkzeug montiert werden. Dieses Werkzeug kann beispielsweise ähnlich einer Spannzange für Sprengringe gestaltet sein. Das Fixierelement kann zur Festlegung der Lagerbüchse in Verbindung mit dem Sicherungselement und der Nut in der Wulst verschiedenartig gestaltet sein.

Vorzugsweise ist vorgesehen, dass die Nut jeweils als eine auf der Bohrungsachse oder dazu parallelen Achse zentrierte Kreisbogennut gestaltet ist.

Das Fixierelement kann einen von dem Boden der Lagerbüchse nach außen abstehenden und auf der Bohrungsachse zentrierten Haltezapfen umfassen, der eine Umfangsnut besitzt. Die Umfangsnut kann dabei konzentrisch zur Kreisbogennut angeordnet sein.

Es kann vorgesehen sein, dass der Bogenabschnitt und der/die Halteabschnitte in einer Ebene oder zueinander versetzten Ebenen liegen und zueinander federnd beabstandet sind.

Ein bevorzugtes Ausführungsbeispiel der Erfindung ist in den Zeichnungen schematisch dargestellt.

Es zeigt
- Figur 1: eine Seitenansicht einer Gelenkwelle, halb in Ansicht und halb geschnitten, wobei die Kreuzgelenke in gestreckter Lage dargestellt sind,
- Figur 2: einen Schnitt II-II gemäß Figur 1 im vergrößerten Maßstab gegenüber Figur 1,
- Figur 3: eine Draufsicht auf den Augenbereich eines Gabelarms,
- Figur 4: einen Schnitt IV-IV von Figur 3.

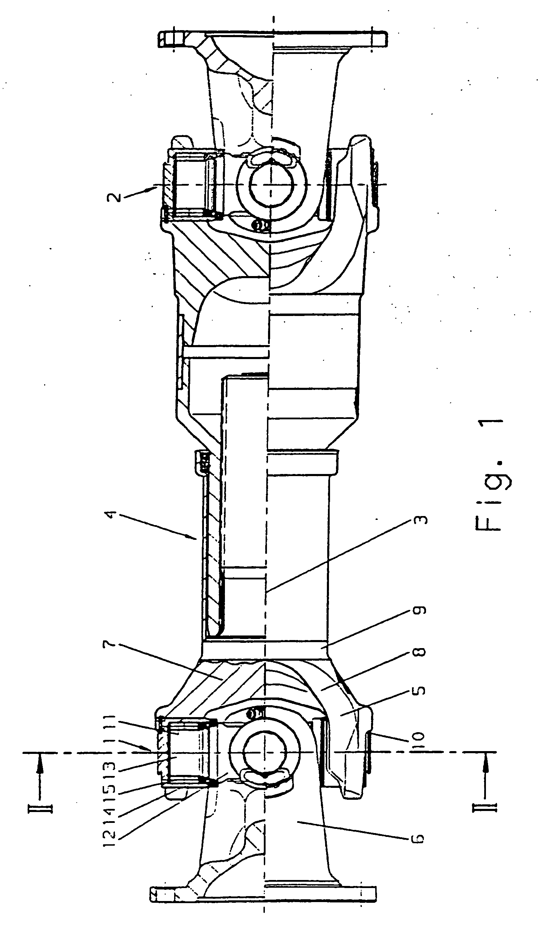

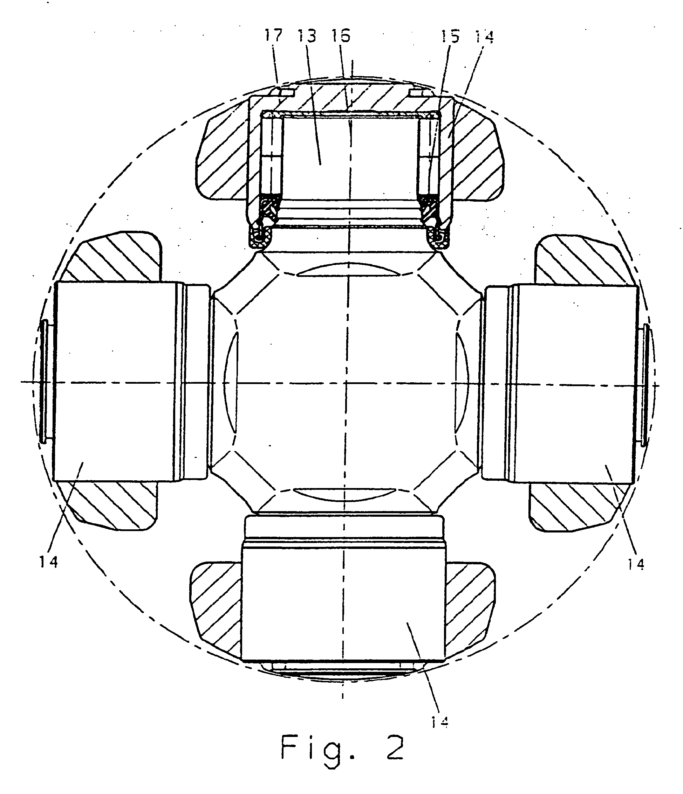

Figur 1 zeigt eine Kreuzgelenkwelle mit einem ersten Kreuzgelenk 1 und einem zweiten Kreuzgelenk 2 sowie einer Teleskopanordnung 4 zwischen den beiden Kreuzgelenken 1, 2, die eine Lageveränderung derselben entlang der Längsachse 3 zulässt. Figur 2 zeigt einen Schnitt II-II von Figur 1 im vergrößerten Maßstab. Die Kreuzgelenke 1, 2 sind in der gestreckten Lage dargestellt, d.h. bei 0° Beugewinkel. Alle Bauteile sind auf der Längsachse 3 ausgerichtet.

Da eine im Prinzip gleiche Ausbildung für die beiden Kreuzgelenke 1, 2 gegeben ist, mit Ausnahme deren Anschlüsse zur Teleskopanordnung 4 hin, erfolgt eine Beschreibung der Erfindung anhand des ersten Kreuzgelenkes 1. Das erste Kreuzgelenk 1 besteht aus einer ersten Gelenkgabel 5 und einer zweiten Gelenkgabel 6. Die erste Gelenkgabel 5 weist einen Verbindungsabschnitt 9 auf, von dem zwei Gabelarme ausgehen, nämlich der erste Gabelarm 7 und der zweite Gabelarm 8. Beide Gabelarme 7, 8 sind im Abstand zur Längsachse 3 angeordnet, d.h., sie sind von dieser Längsachse 3 in entgegengesetzte Richtungen diametral versetzt. Die beiden Gabelarme 7, 8 weisen jeweils einen Augenbereich 10 an ihrem dem Verbindungsabschnitt 9 entfernten Ende auf. Die Augenbereiche 10 besitzen Lagerbohrungen 11, welche rechtwinklig zur Längsachse 3 verlaufen. Die Lagerbohrungen 11 beider Gabelarme 7, 8 liegen auf einer gemeinsamen Bohrungsachse. Dies ist insbesondere aus Figur 2 erkennbar. Aus Figur 2 ist ebenfalls erkennbar, dass in den Lagerbohrungen 11 mit der Bohrungsachse 16 zwei Zapfen 13 eines vier Zapfen aufweisenden Zapfenkreuzes 12 aufgenommen sind. Die Achsen der vier Zapfen 13 liegen in einer Ebene. Die Zapfen verlaufen rechtwinklig zueinander.

Die Lagerung des Zapfenkreuzes 12 in der Lagerbohrung 11 erfolgt mittels Lagerbüchsen 14, die unter Zwischenschaltung von Wälzkörpern 15 jeweils einen Zapfen 13 aufnehmen. Die Lagerbüchsen 14 sind einseitig durch einen Boden 17 verschlossen.

Die Ausbildung der zweiten Gelenkgabel 6 entspricht im wesentlichen der Ausbildung der ersten Gelenkgabel 5 mit Ausnahme der Anschlüsse. Während die erste Gelenkgabel 5 mit einem Zapfen der Teleskopanordnung 4 verbunden ist, weist die zweite Gelenkgabel 6 einen Flansch auf. Die Gelenkwelle dient zum Weiterleiten eines Drehmomentes und ist für hohe Drehmomente ausgelegt. Solche leistungsstarken Gelenkwellen werden beispielsweise in Antrieben von Walzwerken eingesetzt.

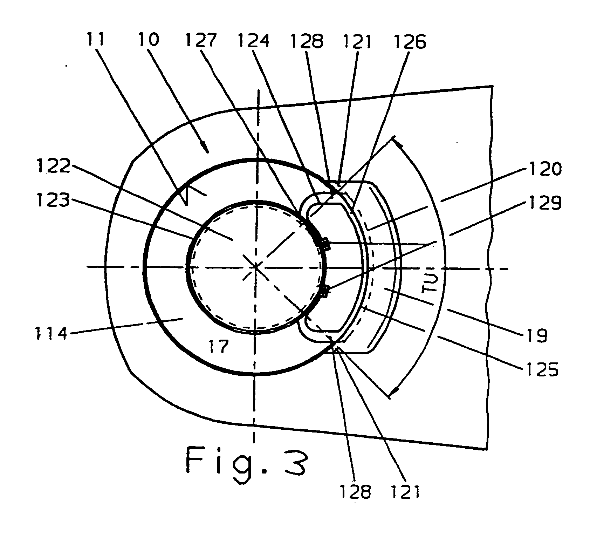

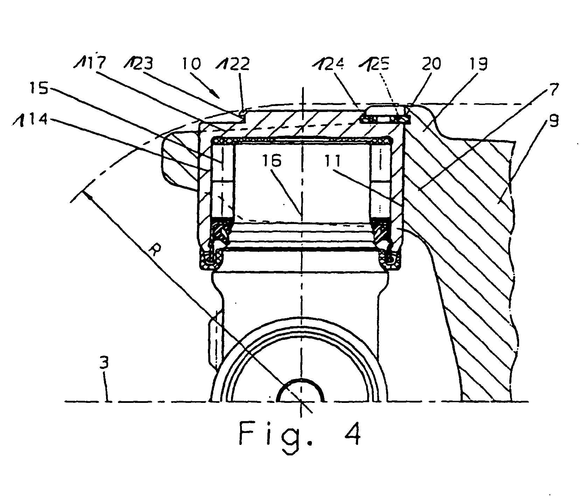

Anhand der Figuren 3 und 4 erfolgt eine detaillierte Beschreibung der bevorzugten Ausgestaltung für die Sicherung der Lagerbüchse in der Lagerbohrung 11 anhand der deutlich wird, dass eine kompaktere Bauweise erzielbar ist. Die in Bezug auf den ersten Gabelarm 5 nachfolgend beschriebene Gestaltung ist auch auf die weiteren Lagerungen anwendbar.

In der Lagerbohrung 11 im Augenbereich des ersten Gabelarms 7 sitzt eine Lagerbüchse 114. In dieser wird ein Zapfen 13 unter Zwischenschaltung von Wälzkörpern 15 gelagert. Es ist die Bohrungsachse 16 erkennbar, die mit der Zapfenachse des Zapfens 13 übereinstimmt. Ferner ist die Längsachse 3 dargestellt. Im Schnittpunkt der Bohrungsachse 16 mit der Längsachse 3 liegt der Beugemittelpunkt des ersten Kreuzgelenkes 1. Im Augenbereich 10 ist über ein Teilumfang TU der Lagerbohrung 11 zum Verbindungsabschnitt 9 hin außen an den Gabelarm 7 eine Wulst 19 angeformt. Diese weist zur Lagerbohrung 11 hin eine Kreisbogennut 20 auf. Das Zentrum dieser Kreisbogennut 20 ist beim Ausführungsbeispiel auf der Bohrungsachse 16 zentriert. Die Wulst 19 ist zu einer Parallelen 18 zur Längsachse 3 durch die Bohrungsachse 16 symmetrisch gestaltet, d.h. der Winkel von beispielsweise 90°, der durch den Teilumfang TU bezogen auf die Bohrungsachse 16 gebildet ist, wird durch die Parallele 18 halbiert. Die Kreisbogennut 20 ist an den Umfangsenden durch Anschläge 21 begrenzt. An den Boden 117 der Lagerbüchse 114 ist nach außen vorstehend ein Haltezapfen 122 angeformt. Dieser ist auf der Bohrungsachse 16 zentriert und besitzt eine Umfangsnut 123, welche im montierten Zustand der Lagerbüchse 114 der Kreisbogennut 20 gegenüberliegt. Der Flächenabschnitt des Bodens 117, der neben dem Haltezapfen 122 liegt, ist im Bereich des freien Endes des ersten Gabelarmes 7 bzw. des Augenbereiches desselben, von dem Verbindungsabschnitt 9 entfernt, geringfügig außerhalb der radial äußeren Abmessungen des Augenbereiches angeordnet, was durch den eingezeichneten Rotationsradius R bzw. den von diesem umschriebenen Rotationskreis ersichtlich ist. Es ist erkennbar, dass die größten radialen Abmessungen im Bereich der Bohrungsachse 16 liegen. Zur Sicherung der Lagerbüchse 114 dient ein erster Bogenabschnitt 126, dessen vordere Kante einen Eingriffsabschnitt 125 bildet, der in die Kreisbogennut 20 der Wulst 19 eingreift. Das Sicherungselement 124 weist zwei Halteabschnitte 127 auf, deren äußere Konturen an die Umfangsnut 123 eingepasst sind und in diese eingreifen. An den beiden Enden des Bogenabschnitts 126 schließen sich Verbindungsabschnitte 128 an, die die Halteabschnitte 127 mit dem Bogenabschnitt 126 verbinden. Der Bogenabschnitt 126 und die Halteabschnitte 127 können aufeinander zu federn. An den Enden der beiden Halteabschnitte 127 sind Ösen 129 für den Eingriff eines Werkzeuges vorgesehen. Das Werkzeug kann zum Beispiel eine Spannzange sein, mit deren Hilfe das Sicherungselement 124 montiert und demontiert werden kann. Damit das Sicherungselement 124 sich nicht in Umfangsrichtung um die Bohrungsachse 16 in der Kreisbogennut 20 und der Umfangsnut 122 verstellen und damit außer Kontakt zu diesen gelangen kann, ist die Kreisbogennut 20 an den Enden bezüglich ihres Teilumfangs durch die Anschläge 21 geschlossen. Diese können beispielsweise dadurch erzeugt werden, dass nach dem Herstellen der Kreisbogennut 20 und der Erstmontage eines Sicherungselementes 124 die äußeren Abschnitte der Wulst 19 oberhalb der Kreisbogennut 20 verformt werden.

Alternativ ist es möglich, den Erzeugungsmittelpunkt der Umfangsnut 123 und den der Kreisbogennut 20 zu einander zu versetzen. Beispielsweise könnte der Mittelpunkt der Kreisbogennut 20 nicht auf der Bohrungsachse 16 angeordnet sein, sondem in Richtung von der Wulst 19 weg von dieser versetzt angeordnet sein.

Bei den Sicherungselementen 124 kann die Dicke so gewählt werden, wie sie üblicherweise im Zusammenhang mit Sicherungsringen für die Montage von Lagerbüchsen in Zapfenkreuzen gewählt wird, um die nötigen Spiele zu erzeugen.

### Bezugszeichenliste

- 1: erstes Kreuzgelenk
- 2: zweites Kreuzgelenk
- 3: Längsachse
- 4: Teleskopanordnung
- 5: erste Gelenkgabel
- 6: zweite Gelenkgabel
- 7: erster Gabelarm
- 8: zweiter Gabelarm
- 9: Verbindungsabschnitt
- 10: Augenbereich
- 11: Lagerbohrung
- 12: Zapfenkreuz
- 13: Zapfen
- 15: Wälzkörper
- 16: Bohrungsachse / Zapfenachse
- 18: Parallele
- 19: Wulst
- 20: Kreisbogennut
- 21: Anschlag
- 30: Kopfschraube
- 31: Gewindebohrung
- 32: Durchgangsbohrung
- 33: Durchgangsbohrung
- 34: Sicherungsring
- 114: Lagerbüchse
- 117: Boden
- 122: Haltezapfen
- 123: Umfangsnut
- 124: Sicherungselement
- 125: Eingriffsabschnitt
- 126: Bogenabschnitt
- 127: Halteabschnitt
- 128: Verbindungsabschnitt
- 129: Öse

- R: Rotationsradius
- TU: Teilumfang

## Patentansprüche

1. Kreuzgelenk (1)
mit zwei Gelenkgabeln (5,6),
- die jeweils auf einer Längsachse (3) zentriert sind,
- die jeweils einen Verbindungsabschnitt (9) aufweisen,
- die jeweils zwei Gabelarme (7,8) aufweisen, die jeweils vom Verbindungsabschnitt (9) ausgehen und dem Verbindungsabschnitt (9) entfernt von der Längsachse (3) in entgegengesetzte Richtungen versetzt jeweils in einem Augenbereich (10) enden, und
- die jeweils eine durchgehende und rechtwinklig zur Längsachse (3) auf einer Bohrungsachse (16) angeordnete Lagerbohrung (11) aufweisen, und
- wobei die Gabelarme (7, 8) mindestens einer der beiden Gelenkgabeln (5, 6) auf einem Teilumfang (TU) der Lagerbohrung (11) symmetrisch zu einer Parallelen (18) zur Längsachse (3) durch die Bohrungsachse (16) zum Verbindungsabschnitt (9) hin an den Gabelarmen (7,8) außen mit einer Wulst (19) versehen sind, welche zur Lagerbohrung (11) hin jeweils mit einer Nut (20) versehen sind,
mit einem Zapfenkreuz (12),
- das vier Zapfen (13) aufweist, die paarweise auf einer Zapfenachse angeordnet sind und
- deren Zapfenachsen in einer Ebene rechtwinklig zueinander angeordnet sind,
mit Lagerbüchsen (14),
- die die Zapfen (13) lagern und selbst jeweils in einer Lagerbohrung (11) eines Gabelarms (7,8) aufgenommen sind,
- die durch einen Boden (17) verschlossen sind und
- denen jeweils ein Fixierelement (122) zugeordnet ist, und
mit einem Sicherungselement (124) je Lagerbüchse (114),
- das einen Eingriffsabschnitt (125) aufweist, der in die Nut (20) der Wulst (19) des zugehörigen Gabelarms (7, 8) eingreift,
- das zusammen mit dem Fixierelement (122) die Lagerbüchse (144) axial unverschiebbar in der Lagerbohrung (11) hält, wobei are Fixierelement einen Haltezapfen (22, 122, 322) umfasst, der eine Umfangsnut (23, 123, 323) besitzt,
**dadurch gekennzeichnet,**
**dass** das Sicherungselement (124) einen Bogenabschnitt (126) aufweist, der den Eingriffsabschnitt (125) bogenartigen ausbildet und der in die als Kreisbogennut gestaltete Nut (20) der Wulst (19) eingreift,
**dass** das Sicherungselement (124) zwei in die Umfangsnut (123) des Haltezapfens (122) eingreifende Halteabschnitte (127) und die Enden der Halteabschnitte (127) mit den Enden des Bogenabschnittes (126) verbindende Verbindungsabschnitte (128) umfasst, und
**dass** an den freien Enden der Halteabschnitte (127) jeweils eine Öse (129) für den Eingriff eines Werkzeuges angebracht ist.

2. Kreuzgelenk nach Anspruch 1,
**dadurch gekennzeichnet,**
**dass** die Nut (20) jeweils als eine auf der Bohrungsachse (16) oder dazu parallelen Achse zentrierte Kreisbogennut gestaltet ist.

3. Kreuzgelenk nach Anspruch 1,
**dadurch gekennzeichnet,**
**dass** das Fixierelement einen von dem Boden der Lagerbüchse (14) nach außen abstehenden und auf der Bohrungsachse (16) zentrierten Haltezapfen (122) umfasst, der eine Umfangsnut (123) besitzt.

4. Kreuzgelenk nach Anspruch 1,
**dadurch gekennzeichnet,**
**dass** der Bogenabschnitt (126) und die Halteabschnitte (127) in einer Ebene oder zueinander versetzten Ebenen liegen und zueinander federnd beabstandet sind.

## Claims

1. A universal joint (1), comprising
two yokes (5, 6)
- being aligned to a longitudinal axis (3),
- each comprising a connecting portion (9),
- each having two yoke arms (7, 8) each extending from connecting portion (9) and each ending in a receiving opening portion (10) opposite the connecting portion (9) and spaced from the longitudinal axis (3) in opposite directions, and
- each having a bearing through bore (11) provided perpendicular to longitudinal axis (3) along a bore axis (16) and
- wherein the yoke arms (7, 8) of at least one of the two yokes (5, 6), on a partial circumference (TU) of the bearing bore (11) symmetric to a parallel (18) of the longitudinal axis (3) through the bore axis (16), are provided with a bead (19) at an outer surface of the yoke arms (7, 8) extending towards connecting portion (9), said bead being provided with a groove (20) each in the direction of bearing bore (11),
a pivot member (12),
- provided with four trunnions (13) disposed in pairs on a trunnion axis and
- their trunnion axes being arranged in one plane perpendicular to each other,
bearing cups (14),
- in which the trunnions (13) are journaled and which themselves are received in a bearing bore (11) of a yoke arm (7, 8),
- which are closed by a bottom wall (17) and
- which are associated each with a fixing element (122), and
a retainer element (124) per bearing cup (114)
- being provided with an engaging portion (125) engaging the groove (20) of the bead (19) of the associated yoke arm (7, 8), and
- which, together with the fixing element (122), axially locks the bearing cup (144) in place in the bearing bore (11), wherein the fixing element comprises a securing pin (22, 122, 322) having a circumferential groove (23, 123, 323),
**characterized in**
**that** the retainer element (124) has an arc-shaped portion (126) forming the engaging portion (125) like a circular arc and engaging the arc-like formed groove (20) of the bead (19),
**that** retainer element (124) comprises two retaining portions (127) engaging the circumferential groove (123) of the securing pin (122) as well as connection portions (128) connecting the ends of the retaining portion (127) to the ends of the arc-shaped portion (126), and
**that** a lug (129) is disposed at each of the free ends of the retaining portions (127) for engagement of a tool.

2. The universal joint according to Claim 1,
**characterized in**
**that** each groove (20) is designed in the form of a circular arc groove aligned to the bore axis (16) or a parallel axis thereto, respectively.

3. The universal joint according to Claim 1,
**characterized in**
**that** the fixing element comprises a securing pin (122) protruding outwardly from the bottom wall of bearing cup (14) and being aligned to the bore axis (16), said securing pin having a circumferential groove (123).

4. The universal joint according to Claim 1
**characterized in**
**that** the arc-shaped portion (126) and the retaining portions (127) lay in one plane or in planes offset to each other being elastically spaced from each other.

## Revendications

1. Joint universel (1)
avec deux fourches articulées (5, 6),
- lesquelles sont respectivement centrées sur un axe longitudinal (3),
- lesquelles présentent respectivement un segment de onction (9),
- lesquelles présentent respectivement deux parties horizontales de fourche (7, 8) partant respectivement du segment de jonction (9) et se terminant respectivement en éloignement du segment de jonction (9) en déport en direction opposée à l'axe longitudinal (3) dans une zone d'oeil (10), et
- lesquelles présentent respectivement un alésage de roulement (11) ininterrompu et aménagé en angle droit à l'axe longitudinal (3) sur un axe d'alésage (16), et
- les parties horizontales de fourche (7, 8) d'au moins l'une des deux fourches articulées (5, 6) étant munies d'un renflement (19) sur une périphérie partielle (TU) de l'alésage de roulement (11) de manière symétrique à une parallèle (18) à l'axe longitudinal (3) à travers l'axe d'alésage (16) vers le segment de jonction (9) sur l'extérieur des parties horizontales de fourche (7, 8), lesquels renflements sont respectivement munis d'une rainure (20) vers l'alésage de roulement (11),
avec un raccord en croix à pivots (12),
- lequel présente quatre pivots (13) disposés par paires sur un axe de pivot et
- dont les axes de pivot sont disposés dans un plan en angle droit l'un par rapport à l'autre, avec des coussinets (14),
- lesquels supportent les pivots (13) et sont eux-mêmes respectivement logés dans un alésage de roulement (11) d'une partie horizontale de fourche (7, 8),
- lesquels sont enfermés par un fond (17) et
- auxquels un élément de fixation (122) est respectivement associé, et
avec un élément de retenue (124) par coussinet (114),
- lequel présente un segment d'engrènement (125), lequel est en prise dans la rainure (20) du renflement (19) de la partie horizontale de fourche (7, 8) associée,
- lequel maintient, ensemble avec l'élément de fixation (122), le coussinet (144) de manière non déplaçable axialement dans l'alésage de roulement (11), l'élément de fixation comprenant un pivot de fixation (22, 122, 322), lequel possède une rainure périphérique (23, 123, 323),
**caractérisé en ce que**
l'élément de retenue (124) présente un segment en arc (126), lequel forme le segment d'engrènement à la manière d'un arc et lequel se met en prise avec la rainure (20) réalisée en tant que rainure en arc de cercle du renflement (19),
**en ce que** l'élément de retenue (124) comprend deux segments de retenue (127) en prise dans la rainure périphérique (123) du pivot de fixation (122) et **en ce que** les extrémités des segments de retenue (127) avec les extrémités du segment en arc (126) comprennent des segments de jonction (128) assurant la jonction, et
**en ce qu'**aux extrémités libres des segments de retenue (127), respectivement un anneau (129) est aménagé pour la mise en prise avec un outillage.

2. Joint universel selon la revendication 1, **caractérisé en ce que** la rainure (20) est respectivement réalisée en tant que rainure en arc de cercle sur l'axe d'alésage (16) ou centrée sur l'axe parallèle à celui-ci.

3. Joint universel selon la revendication 1, **caractérisé en ce que** l'élément de fixation comprend un pivot de fixation (122) en saillie vers l'extérieur à partir du fond du coussinet (14) et centré sur l'axe d'alésage (16), lequel possède une rainure périphérique (123).

4. Joint universel selon la revendication 1, **caractérisé en ce que** le segment en arc (126) et les segments de retenue (127) se situent dans un plan ou dans des plans décalés les uns par rapport aux autres et sont espacés élastiquement les uns par rapport aux autres.
